# EUROPÄISCHE PATENTSCHRIFT

(11) **EP 1 394 216 B1**
(45) Veröffentlichungstag und Bekanntmachung des Hinweises auf die Patenterteilung: **22.02.2006**
(21) Anmeldenummer: 03016369.5
(22) Anmeldetag: 19.07.2003
(51) Int. Cl.: C08L 83/04

(54) **Verfahren zur Herstellung von Entschäumern**
Method for the production of defoamers
Méthode de fabrication d'agents anti-mousse

(30) Priorität: 02.09.2002 DE 10240371
(43) Veröffentlichungstag der Anmeldung: 03.03.2004
(73) Patentinhaber: Glatt Ingenieurtechnik GmbH, D-99427 Weimar (DE)
(72) Erfinder: Rümpler, Karlheinz, Dr., 99425 Weimar (DE); Walter, Ulrich, Dr., 99423 Weimar (DE)
(74) Vertreter: Maucher, Wolfgang

(56) Entgegenhaltungen:
- EP-A- 0 163 398
- EP-A- 0 286 169
- EP-A- 0 684 303
- DE-C- 975 918
- DE-C- 19 917 186
- US-A- 4 696 761

## Beschreibung

Die Erfindung betrifft ein Verfahren zur Herstellung von Entschäumern gemäß dem im Oberbegriff des Patentanspruches 1 genannten Merkmalen.

Es ist bekannt, dass Zusätze von geringen Mengen verschiedener silikonhaltiger Mischungen die Schaumbildung von in Flüssigkeiten gelösten Wasch- oder Reinigungsmitteln vermindern oder unterdrücken. So ist aus der DE 100 01 945 A1 eine Silikonentschäumer-Mischung bekannt, die ein Polysiloxan, ein Katalysator, Füllstoffe, ein Si-Harz, ein lineares Diorgansiloxan, ein Paraffin oder dergleichen sowie ein Hydrophobierungsagenz enthalten, wobei bei der Herstellung die Mischung unter Vakuum von verdampfbaren Bestandteilen befreit werden.

Nachteilig beim Stand der Technik ist, dass die Herstellung des Entschäumungsmittels sehr aufwendig ist. Aufgrund der Vielzahl der verwendeten Einzelkomponenten liegt kein, auf das Einzelkorn bezogen, homogenes Endprodukt vor. Das hat zur Folge, dass zur Erzielung eines entsprechenden Entschäumungsgrades mehr Entschäumungsmittel eingesetzt werden muss als es tatsächlich notwendig wäre, weil die entsprechende Homogenität des Entschäumers nicht gewährleistet ist.

Der Erfindung liegt die Aufgabe zugrunde, ein Verfahren zur Herstellung von in Wasch- und Reinigungsmitteln oder in schäumenden Flüssigkeiten einsetzbaren Entschäumern zu entwickeln, mit dem bei einer einfachen und kostengünstigen Herstellungsweise ein hochwirksames, homogenes und sehr gut dispergierbares Endprodukt mit guten Lagereigenschaften entsteht.

Die Aufgabe wird erfindungsgemäß durch die im kennzeichnenden Teil des Patentanspruches 1 beschriebenen Merkmalen gelöst. Erfindungsgemäß erfolgt die Herstellung von in Wasch- und Reinigungsmitteln einsetzbaren Entschäumern dadurch, dass kontinuierlich eine homogene Schmelzesuspension/-emulsion, bestehend aus aufgeschmolzenem Harnstoff, 1-10% fester Stärke und 5-25% Silikonöl, in eine aus materialeigenem Gut bestehende Wirbelschicht gedüst wird, wobei unter Zuführung von kalter Zuluft eine definierte Erstarrung und Granulierung der Schmelzesuspension/-emulsion in der Wirbelschicht bei Wirbelschichttemperaturen von 30-60 °C zu homogenen Granalien mit einer definierten Korngröße von vorzugsweise 0,2-2,0 mm und einer Schüttdichte von vorzugsweise größer 600 kg/m³ erfolgt.

Der Vorteil der erfindungsgemäßen Lösung besteht darin, dass auf Grund der homogenen Verteilung der Ausgangskomponenten in der Ausgangsschmelzesuspension/-emulsion auch ein homogenes Endprodukt entsteht, bei dem die Einzelkomponenten auch homogen in den einzelnen Granulatkörnern vorliegen. Das hat zur Folge, dass das Material wesentlich intensiver als Entschäumer in Wasch- und Reinigungsmitteln oder in schäumenden Flüssigkeiten wirkt und die Menge an eingesetzten Entschäumern gegenüber dem Stand der Technik bei gleicher Wirksamkeit um ca. 30% reduziert werden kann. Außerdem weist das Endprodukt bei einer guten Dispergierbarkeit in Flüssigkeiten gute Lagereigenschaften aus.

Ein weiterer Vorteil besteht darin, dass der Herstellungsaufwand sowie die Herstellungskosten gegenüber den bekannten Verfahren reduziert werden.

Der erfindungsgemäß in Granulatform vorliegende Entschäumer wird als Zusatz in festen Wasch- und Reinigungsmitteln oder als Zusatz in schäumenden Flüssigkeiten verwendet.

Weitere vorteilhafte Ausgestaltungen der Erfindung sind in den Unteransprüchen angegeben und werden zusammen mit ihren Wirkungen erläutert.

Die Erfindung wird anhand eines Ausführungsbeispiels näher erläutert.

Zur Herstellung von in Wasch- und Reinigungsmitteln einsetzbaren Entschäumern wird Harnstoff in einem Mischer kontinuierlich aufgeschmolzen; oder bereits als Schmelze zugefürt. Die Temperatur des aufgeschmolzenen Harnstoffs liegt kurz über dessen Schmelztemperatur und beträgt ca. 135°C.

Dem flüssigen Harnstoff werden, gemäß dem Ausführungsbeispiel, auf die Gesamtmenge bezogen 15% flüssiges Silikonöl und 5% Maisstärke zudosiert. Am Austritt des Mischers liegt eine homogene Schmelzesuspension/-emulsion aus Harnstoff, Silikonöl und Maisstärke vor, die temperiert pumpfähig und verdüsbar ist.

Die aus dem Mischer ausgetragene homogene Schmelzesuspension/-emulsion wird über ein Düsensystem, vorzugsweise mittels Zweistoffdüsen, in die aus materialeigenem Gut bestehende Wirbelschicht einer an sich bekannten kontinuierlich arbeitenden Wirbelschichtgranulieranlage gedüst. Die Temperatur der bei Zweistoffdüsen benötigten Düsenluft zum Eindüsen der homogene Schmelzesuspension/-emulsion liegt im Bereich zwischen ± 20 K der Schmelztemperatur des Harnstoffes.

Der Wirbelschichtgranulieranlage wird von unten kalte Zuluft zur Aufnahme der Kristallisationswärme der zugeführten Schmelzesuspension/-emulsion und zur Erzeugung und Aufrechterhaltung der Wirbelschicht zugeführt. Die Temperatur der Zuluft ist dabei gleich bzw. kleiner der Raumlufttemperatur. Durch Absenken der Zulufttemperatur unterhalb der Raumtemperatur wird die Leistungsfähigkeit der Granulierung wesentlich gesteigert, da die Kristallisationswärme schneller und besser abgeführt werden kann. Durch die Abführung der Kristallisationswärme erfolgt eine definierte Erstarrung und Granulierung der aufgedüsten homogenen Schmelzesuspension/-emulsion in der Wirbelschicht bei Wirbelschichttemperaturen von kleiner oder gleich 50°C. Es entsteht durch den klassierenden Austrag ein staubfreies homogenes Granulat mit einem engen Kornband von vorzugsweise 0,2-2 mm und einer Schüttdichte von vorzugsweise größer 600 kg/m³. Der Materialdurchsatz der kontinuierlich betriebenen Wirbelschichtgranulieranlage beträgt 40-50 kg/h.

Die zweite Klassierung der Granalien erfolgt außerhalb der Wirbelschicht. Das abgeschiedene Überkorn wird zerkleinert der Wirbelschicht als materialeigene Keime wieder zugeführt. Das gewünschte Fertigprodukt ist staubfrei und kleiner als das O-berkorn, wobei das obere Siebdeck flexibel einsetzbar ist.

Der in Granulatform vorliegende Entschäumer wird als Zusatz in festen Wasch- und Reinigungsmitteln oder als Zusatz in schäumenden Flüssigkeiten verwendet. Die in festen Wasch- und Reinigungsmitteln eingesetzten Entschäumer wirken erst dann, wenn diese in wässriger oder flüssiger Form vorliegen. Die in schäumenden Flüssigkeiten eingesetzten Entschäumer reduzieren beziehungsweise vermeiden die Oberflächenspannung und somit die Schaumbildung.

Zusammenfassend läßt sich folgendes feststellen:
Die Erfindung betrifft ein Verfahren zur Herstellung Entschäumern, bei dem dem Entschäumer ein silikonhaltiges Material beigemischt wird. Der Erfindung liegt die Aufgabe zugrunde, ein Verfahren zur Herstellung von in Wasch- und Reinigungsmitteln oder in schäumenden Flüssigkeiten einsetzbaren Entschäumern zu entwickeln, mit dem bei einer einfachen und kostengünstigen Herstellungsweise ein hochwirksames, homogenes und sehr gut dispergierbares Endprodukt mit guten Lagereigenschaften entsteht. Erfindungsgemäß erfolgt die Herstellung von in Wasch- und Reinigungsmitteln einsetzbaren Entschäumern dadurch, dass kontinuierlich eine homogene Schmelzesuspension/-emulsion, bestehend aus aufgeschmolzenen Harnstoff, 1-10 % fester Stärke und 5-25 % Silikonöl, in eine aus materialeigenem Gut bestehende Wirbelschicht gedüst wird, wobei unter Zuführung von kalter Zuluft eine definierte Erstarrung und Granulierung der Schmelzesuspension/-emulsion in der Wirbelschicht bei Wirbelschichttemperaturen von 30-60 °C zu homogenen Granalien mit einer definierten Korngröße von vorzugsweise 0,2-2,0 mm und einer Schüttdichte von vorzugsweise größer 600 kg/m³ erfolgt.

## Patentansprüche

1. Verfahren zur Herstellung von Entschäumern, bei dem dem Entschäumer ein silikonhaltiges Material beigemischt wird, **dadurch gekennzeichnet, dass**
- kontinuierlich einer Harnstoffschmelze unter Bildung einer homogenen Schmelzesuspension/-emulsion auf die Gesamtmenge bezogen 1-10 % feste Stärke und 5-25 % flüssiges Silikonöl zugemischt werden,
- die homogene Schmelzesuspension/-emulsion in eine aus materialeigenem Gut bestehende Wirbelschicht gedüst wird,
- der Wirbelschicht von unten kalte Zuluft zur Aufnahme der Kristallisationswärme der zugeführten Schmelzesuspension/-emulsion und zur Erzeugung und Aufrechterhaltung der Wirbelschicht derart zugeführt wird, dass eine definierte Erstarrung und Granulierung der Schmelzesuspension/-emulsion in der Wirbelschicht bei Wirbelschicht temperaturen von 30-60°C zu homogenen Granalien mit einer Korngröße von 0,2-2,0 mm und einer Schüttdichte von > 600 kg/m³ erfolgt.

2. Verfahren nach Anspruch 1, **dadurch gekennzeichnet, dass** die Schmelzesuspension/-emulsion mittels Zweistoffdüsen der Wirbelschicht zugeführt wird.

3. Verfahren nach Anspruch 1 und 2, **dadurch gekennzeichnet, dass** die Temperatur der über die Zweistoffdüsen zugeführten Düsenluft kurz unter bis kurz über der Schmelztemperatur des Harnstoffs liegt.

4. Verfahren nach Anspruch 1 bis 3, **dadurch gekennzeichnet, dass** das aus der Wirbelschicht abgeschiedene Unterkorn, welches Filterstaub und/oder Feinkorn der externen Siebung sein kann, der Wirbelschicht als materialeigene Keime zurückgeführt wird.

5. Verfahren nach Anspruch 1 bis 4, **dadurch gekennzeichnet, dass** das nach der externen Siebung abgeschiedene Überkorn zerkleinert der Wirbelschicht als materialeigene Keime zurückgeführt wird.

6. Verfahren nach Anspruch 1 bis 5, **dadurch gekennzeichnet, dass** die Bildung der homogenen Schmelzesuspension/-emulsion bei Temperaturen kurz über der Schmelztemperatur des Harnstoffes erfolgt.

7. Verfahren nach Anspruch 1 bis 6, **dadurch gekennzeichnet, dass** der Harnstoffschmelze Maisstärke zugemischt wird.

8. Verfahren nach Anspruch 1 bis 7, **dadurch gekennzeichnet, dass** die Temperatur der der Wirbelschicht zugeführten Zuluft kleiner oder gleich der Raumlufttemperatur ist.

9. Verwendung der Entschäumer nach Anspruch 1 bis 8, **dadurch gekennzeichnet, dass** der in Granulatform vorliegende Entschäumer als Zusatz in festen Wasch- und Reinigungsmitteln oder als Zusatz in schäumenden Flüssigkeiten verwendet wird.

## Claims

1. Process for producing defoamers, wherein a silicon-containing material is mixed in with the defoamer, **characterised in that**
- 1-10% of solid starch and 5-25% of liquid silicone oil, based on the total amount, are continuously added to a urea melt, forming a homogeneous molten suspension/emulsion,
- the homogeneous molten suspension/emulsion is sprayed into a fluidised bed consisting of the same material,
- cold air is fed into the fluidised bed from below in order to absorb the heat of crystallisation of the molten suspension/emulsion supplied and in order to generate and maintain the fluidised bed, in such a way that a defined hardening and granulation of the molten suspension/emulsion takes place in the fluidised bed at fluidised bed temperatures of 30 - 60 °C to form homogeneous granules with a particle size of 0.2 - 2.0 mm and a bulk density of > 600 kg/m³.

2. Process according to claim 1, **characterised in that** the molten suspension/emulsion is fed into the fluidised bed through dual-substance nozzles.

3. Process according to claim 1 and 2, **characterised in that** the temperature of the air jet supplied through the dual-substance nozzles is just below to just above the melting temperature of the urea.

4. Process according to claims 1 to 3, **characterised in that** the undersized particles which settle out of the fluidised bed and which may be filter dust and/or fine particles from the external screening are fed back into the fluidised bed as nuclei of the same material.

5. Process according to claims I to 4, **characterised in that** the oversized particles which settle out after the external screening are comminuted and fed back into the fluidised bed as nuclei of the same material.

6. Process according to claims 1 to 5, **characterised in that** the homogeneous molten suspension/emulsion is formed at temperatures just above the melting temperature of the urea.

7. Process according to claims 1 to 6, **characterised in that** maize starch is added to the urea melt.

8. Process according to claims 1 to 7, **characterised in that** the temperature of the air supply fed into the fluidised bed is below or equal to the ambient air temperature.

9. Use of the defoamers according to claims 1 to 8, **characterised in that** the defoamer present in the form of granules is used as an additive in solid washing and cleaning agents or as an additive in foaming liquids.

## Revendications

1. Procédé pour la préparation d'agents anti-moussage, du type dans lequel on adjoint à l'agent anti-moussage, par mélangeage, un matériau contenant du silicium, **caractérisé en ce que**
- on mélange de manière continue à de l'urée en fusion, avec formation d'une suspension/émulsion de substance en fusion homogène, 1-10% d'amidon solide et 5-25% d'huile de silicone liquide, ces quantités étant exprimées en % par rapport à la quantité totale,
- la suspension/émulsion en fusion homogène est pulvérisée sous forme d'une couche tourbillonnaire formée d'une substance spécifique,
- de l'air froid est introduit par le bas dans la couche tourbillonnaire en vue de recueillir la chaleur de cristallisation de la suspension/émulsion en fusion introduite et de conserver l'existence de la couche tourbillonnaire, de manière telle qu'il en résulte un durcissement et une granulation définies de la suspension/émulsion en fusion dans la couche tourbillonnaire, pour une température de couche tourbillonnaire de 30-60°C, pour une granulation homogène d'une grosseur de grains de 0,2-2,0 mm et une densité apparente > 600 kg/m³.

2. Procédé selon la revendication 1, **caractérisé en ce que** la suspension/émulsion en fusion est amenée en couche tourbillonnaire au moyen d'une double buse de pulvérisation.

3. Procédé selon l'une ou l'autre des revendications 1 ou 2, **caractérisé en ce que** la température de l'air amené par une buse située au-dessus de la double buse est légèrement inférieure ou légèrement supérieure à la température de fusion de l'urée.

4. Procédé selon l'une quelconque des revendications 1 à 3, **caractérisé en ce que** les grains se séparant de la portion inférieure de la couche tourbillonnaire, qui peuvent consister en poussière de filtre, et/ou en grains fins ayant traversé le tamis extérieur, sont réintroduits en tant que germes de substance spécifique.

5. Procédé selon l'une quelconque des revendications 1 à 4, **caractérisé en ce que** la portion supérieure de grains, séparée à la suite du tamisage externe, est broyée et réintroduite dans la couche tourbillonnaire en tant que germes de la substance spécifique.

6. Procédé selon l'une quelconque des revendications 1 à 5, **caractérisé en ce que** la formation de la suspension/émulsion en fusion homogène intervient à des températures légèrement supérieures à la température de fusion de l'urée.

7. Procédé selon l'une quelconque des revendications 1 à 6, **caractérisé en ce que** l'on ajoute par mélangeage de l'amidon de maïs à l'urée en fusion.

8. Procédé selon l'une quelconque des revendications 1 à 7, **caractérisé en ce que** la température de l'air introduit dans la couche tourbillonnaire est supérieure ou égale à la température de l'air ambiant.

9. Utilisation de l'agent anti-moussage selon les revendications 1 à 8, **caractérisée en ce que** ledit agent anti-moussage est utilisé sous forme granulaire comme additif à des produits de lavage et de nettoyage solides ou sous forme d'additif à des liquides moussants.
